# EUROPEAN PATENT SPECIFICATION

(11) **EP 2 756 934 B1**
(45) Date of publication and mention of the grant of the patent: **04.09.2019**
(21) Application number: 13151426.7
(22) Date of filing: 16.01.2013
(51) Int. Cl.: B25J 9/16, B25J 15/00, B64F 5/10, B25J 15/06

(54) **Apparatus and method for assembling workpieces**
Vorrichtung und Verfahren zur Montage von Werkstücken
Appareil et procédé d'assemblage de pièces de travail

(43) Date of publication of application: 23.07.2014
(73) Proprietor: Airbus Operations GmbH, 21129 Hamburg (DE)
(72) Inventor: Clausing, Nils, 23909 Ratzeburg (DE); Neuhaus, Frank, 21635 Jork (DE); Weidner, Robert, 29581 Bohlsen (DE); Wulfsberg, Jens, 23843 Neritz (DE); Juedes, Wolfgang, 21640 Nottensdorf (DE)
(74) Representative: Bird & Bird LLP

(56) References cited:
- US-A- 4 527 783
- US-A1- 2003 000 077
- US-A1- 2006 143 890
- US-A1- 2009 025 199

## Description

The present invention relates to an assembling apparatus, an assembling system comprising such assembling apparatus, and a method for assembling workpieces employing such assembling system.

In particular, in a preferred embodiment said apparatus, system, and method may be applied in the field of aircraft construction, said workpieces being aircraft structure components, such as fuselage sections, wing sections, or tail unit sections. However, said apparatus, system, and method may also be applied in other fields, such as automotive construction, in this case said workpieces being car structure components, e.g. body components.

The assembling apparatus for aircraft construction known in the art are usually customized and comprise a stationary portion and one or more fixing portions to which a workpiece may be fixed and which are connected to the stationary portion by one or more actuators, so that upon movement of the actuators the workpiece fixed to the fixing portions may be moved and positioned in relation to another workpiece, thereby forming an assembled overall workpiece. However, as prior to assembling of the two workpieces the exact shape necessary for properly fitting the one workpiece to the other may hardly be determined and the workpieces have a certain flexibility, the shape of the one workpiece is usually adjusted during the assembling process, i.e. the one workpiece is bent while being positioned in relation to the other workpiece until a desired fit of the one workpiece with respect to the other workpiece is obtained. The bending process is carried out by independent movement of the different actuators of the assembling apparatus.

However, the process of bending and positioning of the workpiece at the same time by means of the actuators appears to be difficult and time consuming, when a high accuracy of the position and shape of the one workpiece with respect to the other workpiece is required. In fact, an accuracy above a certain level may not be reached with the before-described apparatus known in the art.

Therefore, it is the object of the present invention to provide an assembling system which allows at the same time to position a workpiece in relation to another workpiece and to adjust the shape of said workpiece in a possibly easy and fast manner and with a possibly high accuracy.

This object is achieved by the assembling system of independent claim 1 comprising an assembling apparatus and a positioning device such as an industrial robot. The assembling apparatus comprises a support structure assembly such as a frame structure which is provided with a coupling portion for coupling the support structure assembly to the positioning device such as an industrial robot, and a plurality of fixing members capable of fixing a workpiece, wherein each fixing member is connected with the support structure assembly via a linear actuator a first end of which being mounted on the support structure assembly and a second end of which carrying the fixing member, wherein the linear actuator is adapted to be controlled such that the distance between the first and the second end may be adjusted by a linear movement.

In such a manner the process of positioning of the workpiece may be carried out by means of the positioning device coupled to the support structure assembly, i.e. the frame, and the process of shape adjusting, i.e. bending, of the workpiece is carried out by means of the linear actuators, so that these processes are decoupled from one another. Thus, the desired shape of the workpiece may be set by a linear movement of the linear actuators and locked when it is obtained, whereupon the desired position of the workpiece in relation to one or more other workpieces is reached by a respective movement of the positioning device. If necessary, the assembling apparatus may also perform the before-described steps in an iterative manner, until both the desired position and shape of the workpiece is achieved.

Moreover, by means of the plurality of linear actuators predetermined forces may be applied to the respective workpiece in only a small region around the point at which the fixing member is attached to the workpiece, whereas in the prior art forces are applied to the workpiece over a large region which does not allow to predict the impact of these forces on the structural integrity of the workpiece.

The support structure assembly may preferably be formed as a closed frame structure, but may also be formed as any other rigid support structure, such as a surface structure, e.g. a plate, a beam assembly, or a box structure. The positioning device may preferably be formed as an industrial robot adapted to move the support structure assembly along and about preferably three orthogonal axes, but may also be any other device capable of moving the support structure assembly in a predetermined manner.

The fixing members may be rigidly or flexibly attached to the second end of the linear actuators and may preferably be formed so as to be easily attached to and detached from the workpiece they are fixing. In particular, a flexible joint is provided between the fixing member and the second end of the linear actuators, so that during the process of bending the workpiece the angular orientation of the fixing members with respect to the corresponding linear actuators may be adjusted to the actual shape of the fixed workpiece. The linear actuators may preferably be common electromagnetically, hydraulically, or pneumatically driven actuators employing coaxial cylinders.

According to a preferred embodiment of the present invention said support structure assembly defines a mounting plane, and the direction of said linear movement is perpendicular to said mounting plane. Preferably, said mounting plane may be defined by the overall shape of said support structure assembly, or by the surface of the support structure assembly to which the linear actuators are attached.

In particular, it is preferred that the linear actuators are arranged on a first side of the mounting plane and that said coupling portion is pointing away from a second side of the mounting plane, wherein said second side is opposite the first side. In such a manner a considerably free movement of on the one hand the support structure assembly by the positioning device, and on the other hand the workpiece by the linear actuators is possible.

It is further possible that said mounting plane has a planar shape or a curved shape. A curved shape of the mounting plane may be preferred in such cases when the workpiece has a curved shape as well so that the shape of the mounting plane and the shape of the workpiece are possibly consistent and the linear actuators extend perpendicularly to both the mounting plane and the plane defined by the workpiece. In cases of a planar shape of the workpiece a support structure assembly defining a planar mounting plane may be applied.

According to a further preferred embodiment force sensor means are provided for detecting and monitoring a force applied by said linear actuators during said linear movement. In particular, it is preferred that memory means are provided for storing data detected by said force sensor means. In such a way the development of the force applied by the linear actuators during linear movement, i.e. during adjusting the shape of the workpiece, may be monitored and analysed for issues of quality control. Especially when there are points of a strong decrease in the detected force development, fracture of the workpiece structure, in particular, fracture of fibres in a composite material may have to be considered. Moreover, the memory means allow to monitor the full "history" of loads applied to the workpiece during the entire manufacturing process.

According to yet another preferred embodiment one or more fixing members are formed as suction cup elements. Suction cup elements represent highly flexible fixing members which may easily be attached to the workpiece by merely contacting the workpiece and evacuating the space between the suction cup and the workpiece and without requiring any bores in the workpiece or additional members for fixing the workpiece.

For evacuation of the suction cup elements a vacuum pump may be connected to the space inside the cups by means of a vacuum pipe. Further, vacuum sensor means may be provided in the space inside the suction cup elements, i.e. in the space between the cup body and the workpiece fixed by the cups, in order to monitor the air pressure in said space during moving and adjusting the shape of the workpiece. Then, control means may be provided controlling the vacuum pump in dependence of the detected air pressure in the suction cup elements so as to secure a sufficient vacuum level between the suction cup elements and the workpiece during the process of moving or shape adjusting of the workpiece, so that the suction cup elements may not accidently disengage from the workpiece during said processes.

However, not all fixing members need to be formed as suction cup elements. It is also possible that some fixing members are formed as suction cup elements, while other fixing members are formed as e.g. bolts which are fixed through bores in the workpiece. Further fixing members, such as clamps, are also conceivable.

The present invention relates to an assembling system comprising an assembling apparatus as described before and a positioning device such as an industrial robot having an end portion being provided with a connector, wherein the positioning device is adapted to move the end portion relative to the position of a base of the positioning device, and wherein the coupling portion of the assembling apparatus is coupled with the connector. The assembling system comprises both the assembling apparatus and the positioning device to which the assembling apparatus is connected and by which the said apparatus is moved in order to position the workpiece in relation to another workpiece. Such positioning device has already been described further above in connection with the assembling apparatus and may basically be a common multi-axial industrial robot.

The assembling system comprises detection means which are adapted for determining the positions in space of a plurality of points on the workpiece. Preferably, the detection means are stationary, and in a first option a stationary projection device is provided for projecting a grid on a workpiece fixed by said fixing members, and a camera system is provided for recording the shape of the grid on the workpiece. As an alternative, a laser tracker such as a LEICA LTD 500 may be employed as a detection device, the laser tracker detecting the spatial position of reflector elements attached to the workpiece. Furthermore, a control unit is provided adapted to control the adjustment of the distance between the first and the second end of one or more of said linear actuators in dependence of the shape of said laser grid recorded by said detection device. For example, as the shape of the workpiece is adjusted, the shape of the laser grid projected on said workpiece changes, so that upon these changes of the shape of said grid detected by the camera system the linear actuators may be controlled by means of the control unit, wherein the distance between the first and the second end of the linear actuators is adjusted, thereby in turn adjusting the shape of the workpiece fixed on the fixing member coupled to the second end of said linear actuators. In such a way the actual shape of the workpiece is adjusted in a controled manner until the desired shape is reached.

Yet a further aspect of the present invention relates to a method for assembling workpieces according to independent claim 8, comprising the following steps:
a. providing a first workpiece and a second workpiece,
b. fixing said first workpiece on the fixing members,
c. adjusting the shape of said first workpiece by adjusting the distance between the first and the second end of the linear actuators, and
d. positioning the shaped first workpiece in relation to the second workpiece by means of the positioning device, so as to form an overall workpiece.

As already described further above in connection with the assembling apparatus by such a method the process of adjusting the shape of the first workpiece and the process of positioning the first workpiece in relation to the second workpiece are decoupled from one another, as the shape adjusting of the first workpiece is carried out by the linear actuators, while the positioning of the first workpiece in relation to the second workpiece is carried out by the positioning device. Both steps may be carried out and controlled independently from one another, subsequently or in parallel, i.e. the afore-mentioned description of the method does not determine the order in which steps c. and d. have to be carried out. It is conceivable that these steps are performed in parallel or one after the other.

Furthermore, it is conceivable that after step d. has been carried out, the workpieces are temporarily removed from each other by a corresponding movement of the positioning device to facilitate preparation of connections between the workpieces while the shape of the workpiece as adjusted before is maintained. After this preparation step has been completed, the workpieces will again be moved towards each other via the positioning device.

There might also be more than one second workpiece in relation to which the first workpiece is positioned. Further, the distance between the first and the second end of the linear actuators is adjusted by a movement of the linear actuator, in particular, by a relative displacement of two portions of the linear actuators. Steps c. and d. may also be performed repeatedly so as to from an iterative process.

In a preferred embodiment the adjustment of the distance between the first and the second end of the linear actuators is controlled in dependence of the force applied by said linear actuators during said linear movement and detected by said force sensor means. In such a manner the shape adjusting process of the first workpiece may be controlled and adapted to the development of the detected forces applied by the linear actuators, i.e. the applied displacement between the first and second end of the linear actuators may be stopped when a sudden drop of force is detected in order to avoid further damage of the workpiece.

The adjustment of the distance between the first and the second end of the linear actuators is controlled in dependence of the shape of the first workpiece fixed on the fixing members. In particular, it is preferred that the shape of the first workpiece is optically detected by a stationary detection device. In particular, it is conceivable that a projection device is employed projecting a grid on said first workpiece, and a camera system recording the shape of the grid on the workpiece. As described further above in connection with the assembling system, in such a manner the adjustment of the shape of the first workpiece by the linear actuators may be controlled by means of the control unit in dependence of the actual shape of the first workpiece, until a desired shape of the first workpiece is obtained. The actual shape of the first workpiece is detected by means of the camera system detecting changes of the shape of a grid projected onto the surface of the first workpiece by means of a projection device.

Alternatively, it is preferred that the actual shape of the first workpiece is detected by a laser tracker device detecting the position of reflector elements attached on the edges of said first workpiece. The most appropriate method for detecting the actual shape of the first workpiece may be determined individually taking into account the form and size of the workpieces as well the infrastructure provided.

According to a preferred embodiment of the present invention the first and the second workpiece are formed as aircraft structure components, in particular fuselage sections, wing sections, or tail unit sections. Usually during assembly aircraft structure components have to be positioned in relation to one another and have to be adjusted in shape, i.e. bent, in order to precisely fit to one another, because they are commonly manufactured in large scale. However, first and second workpieces may also be formed as other components, such as car body components.

In the following a preferred embodiment of the present invention is described by means of a drawing. The drawing shows in
- Fig. 1: a side view of a preferred embodiment of the assembling system,
- Fig. 2: a first perspective view of the assembling system of Fig. 1, and
- Fig. 3: a second perspective view of the assembling system of Fig. 1.

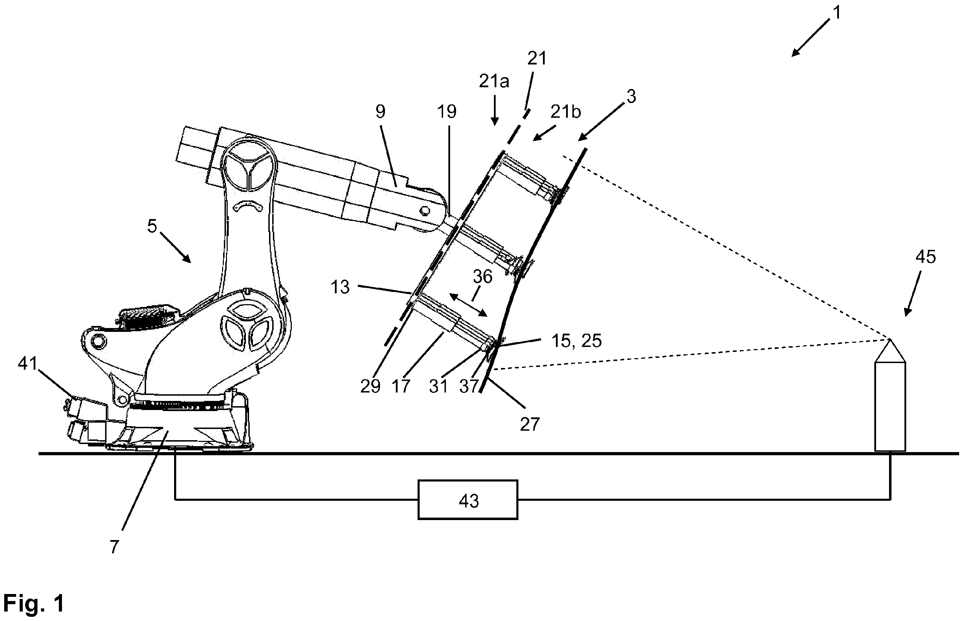

In Fig. 1 an assembling system 1 is illustrated comprising an assembling apparatus 3 and a positioning device 5 to which the assembling apparatus 3 is coupled and by which the assembling apparatus 3 may be moved in space in a controlled manner.

In the present embodiment the positioning device 5 is formed as an industrial robot comprising a stationary base 7 and an end portion 9, said end portion 9 being movable with respect to the base 7 along and about three orthogonal axes. The end portion 9 comprises a connector 11 to which the assembling apparatus 3 is coupled.

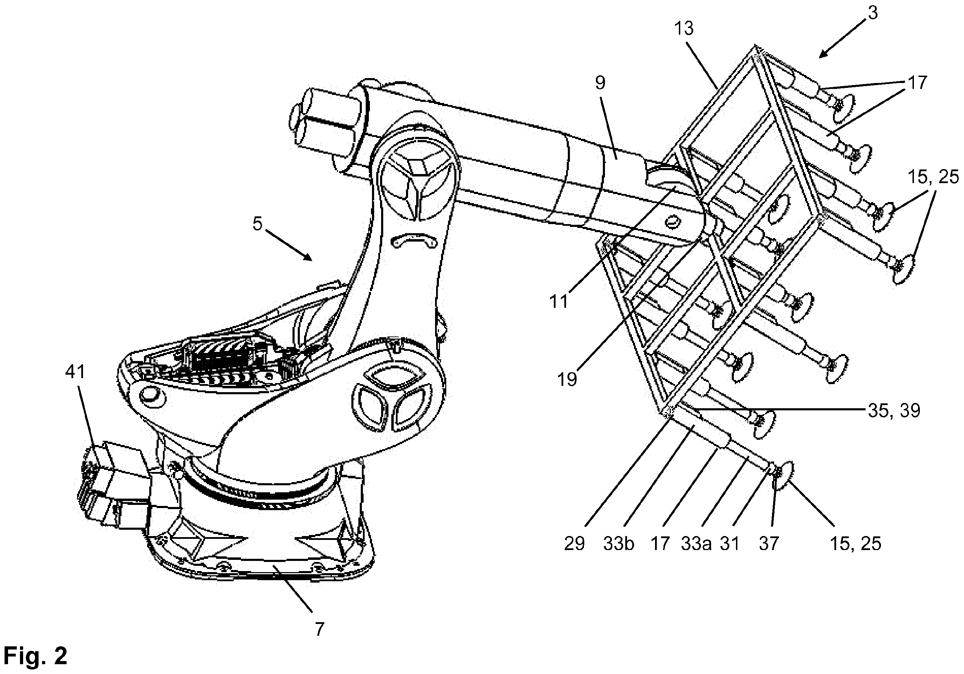

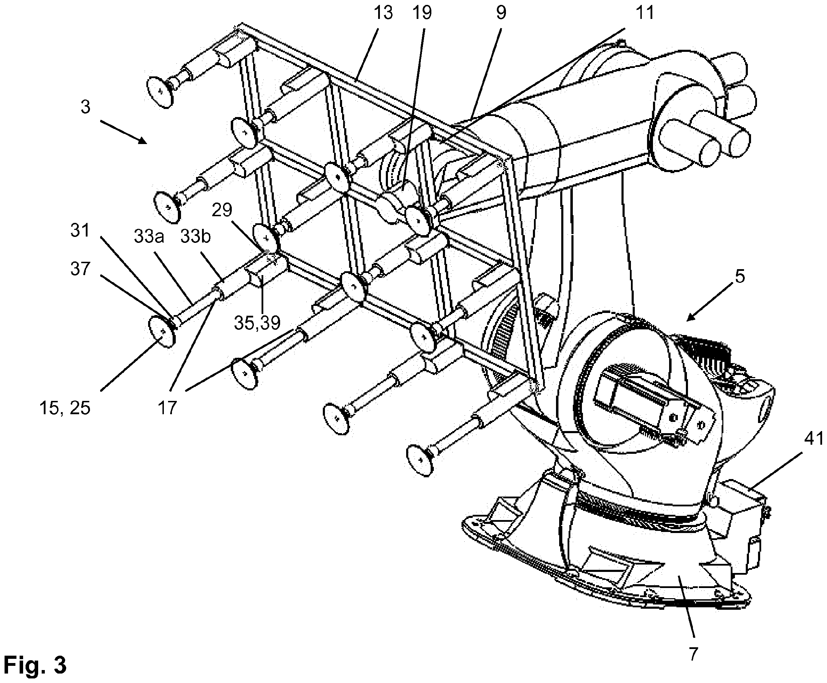

The assembling apparatus 3, which is illustrated in more detail in Fig. 2 and 3, comprises a support structure assembly 13 and a plurality of fixing members 15 connected to the support structure assembly 13 via a plurality of linear actuators 17. The support structure assembly 13 in the present embodiment is formed as a closed frame structure having a coupling portion 19 which is coupled to the connector 11 of the positioning device 5. Said support structure assembly 13 is formed such that it defines a mounting plane 21 having a planar shape, wherein the linear actuators 17 are arranged on a first side 21a of said mounting plane 21 and the coupling portion 19 is arranged on a second side 21b of said mounting plane 21 opposite the first side 21a. Further, transport coupling members 23 are provided on said second side 21b of the mounting plane 21 of said support structure assembly 13 adapted to be coupled to a transport means (not shown in the Figures) like a crane for being transported, when not coupled to a positioning device 5 (see Fig. 2 and 3).

The fixing members 15 in the current embodiment are formed as suction cup elements 25 which are capable of fixing a first workpiece 27, in the present embodiment an aircraft structure component, in particular a fuselage structure section, by being applied to the surface of said first workpiece 27 and evacuating the enclosed space between the suction cup elements 25 and the surface of said first workpiece 27 (as illustrated in Fig. 2 and 3). Said suction cup elements 25 are formed by elastic material, in particular plastic or rubber material.

The linear actuators 17 comprise a first end 29 mounted to the support structure assembly 13 and a second end 31 to which the fixing members 15 are attached. The linear actuators 17 further comprise two coaxial cylinders 33a, 33b which may be moved relatively to one another by an electromagnetic, hydraulic or pneumatic drive 35, so that the distance between the first end 29 and the second end 31 of the linear actuators 17 may be adjusted by a controlled linear movement, the direction 36 of said linear movement being perpendicular to the mounting plane 21. Between the second end 31 of the linear actuators 17 and the fixing members 15 a flexible joint 37 is provided, so that the angular orientation of the fixing members 15 with respect to the linear actuators 17 may be adapted during the linear movement of the linear actuators 17.

Further, force sensor means 39 are provided on the linear actuators 17 detecting a force applied by said linear actuators 17 during linear movement of said linear actuators 17, and memory means 41 are provided for storing the force data detected by said force sensor means 39.

In order to control the shape of the first workpiece 25 fixed by the fixing members 15 a control unit 43 is provided adapted to control the adjustment of the distance between the first and the second end 29, 31 of the linear actuators 17 by controlling the drive 35 of the linear actuators 17 in dependence of the actual shape of a first workpiece 27. Said actual shape of the first workpiece 27 is detected by a stationary optical detection device 45 projecting a grid on the surface of the first workpiece 27 and a camera system recording the shape of the grid projected on said first workpiece 27, said shape of the grid changing upon a change of shape of the first workpiece 27 onto the surface of which the grid is projected (neither projecting device nor camera system are illustrated in the Figures).

Alternatively, the optical detection device 45 is formed as a laser tracker a laser tracker device 45, and reflector elements are provided on the workpiece and/or the fixing members 15 so that the actual shape of the workpiece 25 may be determined by means of the laser beam emitted by laser tracker device 45, reflected by the reflector means and detected again by the tracker device 45.

The method for assembling workpieces according to the present invention employing an assembling system 1 as described before comprises the steps of providing a first workpiece 27 and a second workpiece (step a.), fixing said first workpiece 27 with its surface on the fixing members 15 by applying a vacuum between the suction cup elements 25 and the surface of the first workpiece 27 (step b.), adjusting the shape of said first workpiece 27 by adjusting the distance between the first and the second end 29, 31 of the linear actuators 17 connected to the first workpiece 27 via the fixing members 15 (step c.), and positioning the shape adjusted first workpiece 27 in relation to the second workpiece by means of the positioning device 5, i.e. by movement of the end portion 9 with respect to the base 7, so as to form an overall workpiece (step d.).

The adjustment of the distance between the first and the second end 29, 31 of the linear actuators 17 is controlled in dependence of both the force detected by the force sensor means 39 and applied by the linear actuators 17 during the linear movement, and the actual shape of the first workpiece 27 fixed on the fixing members 15 and detected by the grid projected onto the surface of the first workpiece 25 and monitored by the camera system recording the shape of said grid. Other methods for detecting the actual shape of the first workpiece 27 comprise the steps of providing reflector elements on the edges of the first workpiece 27 and detecting the position of said reflector elements by a laser tracker device (laser scanner device, laser tracker device, and reflector elements neither illustrated in the Figures).

By means of the before described method for assembling workpieces employing the before described assembling system 1, a first workpiece 27 may be adapted in shape and positioned in relation to a second workpiece, these steps being decoupled from one another, i.e. the step of adjusting the shape of the first workpiece 25 is carried out by the linear actuators 17, while the step of positioning the first workpiece 25 in relation to the second workpiece is carried out by the positioning device 5. Both steps do not depend on one another and may be carried out subsequently or in parallel without influencing the other. In such a manner the assembling process of workpieces during manufacturing becomes easier, faster, and more precise, i.e. more reliable.

Furthermore, it is conceivable that after the workpieces have been positioned in close proximity corresponding to the finally connected state, the workpieces may be moved away from each other by the positioning device while the shape of the workpieces is maintained. In this spaced position the connections between the workpieces may be prepared, before the workpieces are again moved towards each other to be finally connected.

## Claims

1. An assembling system (1) comprising an assembling apparatus (3) and a positioning device (5) such as an industrial robot having an end portion (9) which comprises a connector (11), the assembling apparatus (3) comprising:
a support structure assembly (13) such as a frame structure which is provided with a coupling portion (19) for coupling the support structure assembly (13) to the positioning device (5) such as an industrial robot, and
a plurality of fixing members (15) capable of fixing a workpiece (27),
wherein each fixing member (15) is connected with the support structure assembly (13) via a linear actuator (17) a first end (29) of which being mounted on the support structure assembly (13) and a second end (31) of which carrying the fixing member (15),
wherein the linear actuator (17) is adapted to be controlled such that the distance between the first and the second end (29, 31) may be adjusted by a linear movement,
wherein the positioning device (5) is adapted to move the end portion (9) relative to the position of a base (7) of the positioning device (5) and to position a workpiece (27) in relation to another workpiece, so as to form an overall workpiece,
wherein the coupling portion (19) of the assembling apparatus (3) is coupled with the connector (11),
wherein the assembling system (1) further comprises detection means (45) which are adapted for determining the positions in space of a plurality of points on a workpiece (27), and
wherein a control unit (43) is provided adapted to control the adjustment of the distance between the first and the second end (29, 31) of one or more of said linear actuators (17) in dependence of the positions as determined by the detection means (45),
**characterized in**
**that** in order to control the shape of a workpiece (27) fixed by the fixing members (15) the control unit (43) is adapted to control the adjustment of the distance between the first and the second end (29, 31) of the linear actuators (17) by controlling a drive (35) of the linear actuators (17) in dependence of the actual shape of the workpiece (27) detected by the detection means (45).

2. A system according to claim 1, wherein said support structure assembly (13) defines a mounting plane (21), and wherein the direction (36) of said linear movement is perpendicular to said mounting plane (21).

3. A system according to any of claims 1 or 2, wherein force sensor means (39) are provided for detecting a force applied by said linear actuator (17) during said linear movement.

4. A system according to claim 3, wherein memory means (41) are provided for storing data detected by said force sensor means (39).

5. A system according to any of claims 1 to 4, wherein said fixing members (15) are formed as suction cup elements (25) .

6. A system according to claim 1, wherein the detection means (45) comprises a plurality of reflector elements adapted to be fixed at spaced locations on the workpiece (27) and an optical scanning device adapted to emit light in a plurality of directions and determine the position in space of the reflector elements when being fixed to the fixing members by detecting reflexions from the reflector elements generated by the emitted light.

7. A system according to claim 1 wherein the detection means (45) comprises a projection device for projecting a grid on the workpiece (27) when being fixed by said fixing members (15), and
a camera system for recording the shape of the grid on the workpiece (27).

8. A method for assembling workpieces employing an assembling system (1) according to any of claims 1 to 7, comprising the following steps:
a. providing a first workpiece (27) and a second workpiece,
b. fixing said first workpiece (27) on the fixing members (15),
c. adjusting the shape of said first workpiece (27) by adjusting the distance between the first and the second end (29, 31) of the linear actuators (17), and
d. positioning the shaped first workpiece (27) in relation to the second workpiece by means of the positioning device (5), so as to form an overall workpiece,
**characterized in that** the adjustment of the distance between the first and the second end (29, 31) of the linear actuators (17) is controlled in dependence of the shape of the first workpiece (27) fixed on the fixing members (15), and
the shape of the first workpiece (27) is detected by the detection means (45).

9. A method according to claim 8, wherein force sensor means (39) are provided for detecting a force applied by said linear actuator (17) during said linear movement, and wherein the adjustment of the distance between the first and the second end (29, 31) of the linear actuators (17) is controlled in dependence of the force applied by said linear actuators (17) during said linear movement and detected by said force sensor means (39).

10. A method according to claim 8 or 9, wherein the first workpiece (27) and the second workpiece are formed as aircraft structure components, in particular fuselage sections, wing sections, or tail unit sections.

## Patentansprüche

1. Montagesystem (1), das eine Montagevorrichtung (3) und eine Positionierungsvorrichtung (5) umfasst, zum Beispiel einen Industrieroboter, der einen Endabschnitt (9) aufweist, der ein Verbindungsstück (11) umfasst, wobei die Montagevorrichtung (3) Folgendes umfasst:
eine Trägerstrukturanordnung (13), zum Beispiel eine Rahmenstruktur, die mit einem Kopplungsabschnitt (19) zum Koppeln der Trägerstrukturanordnung (13) mit der Positionierungsvorrichtung (5), zum Beispiel einem Industrieroboter, umfasst, und
mehrere Fixierungselemente (15), die ein Werkstück (27) fixieren können,
wobei jedes Fixierungselement (15) über einen Linearaktor (17) mit der Trägerstrukturanordnung (13) verbunden ist, dessen erstes Ende (29) an der Trägerstrukturanordnung (13) montiert ist und dessen zweites Ende (31) das Fixierungselement (15) trägt,
wobei der Linearaktor (17) dazu eingerichtet ist, gesteuert zu werden, sodass der Abstand zwischen dem ersten und zweiten Ende (29, 31) durch eine lineare Bewegung eingestellt werden kann,
wobei die Positionierungsvorrichtung (5) dazu eingerichtet ist, den Endabschnitt (9) in Bezug zur Position einer Basis (7) der Positionierungsvorrichtung (5) zu bewegen und ein Werkstück (27) in Bezug zu einem anderen Werkstück zu positionieren, um ein Gesamtwerkstück zu bilden,
wobei der Kopplungsabschnitt (19) der Montagevorrichtung (3) mit dem Verbindungsstück (11) gekoppelt ist,
wobei das Montagesystem (1) ferner eine Erfassungseinrichtung (45) umfasst, die dazu eingerichtet ist, die räumlichen Positionen mehrerer Punkte auf einem Werkstück (27) zu bestimmen, und
wobei eine bereitgestellte Steuerungseinheit (43) dazu eingerichtet ist, in Abhängigkeit der von der Erfassungseinrichtung (45) bestimmten Positionen die Anpassung des Abstands zwischen dem ersten und zweiten Ende (29, 31) eines oder mehrerer der Linearaktoren (17) zu steuern,
**dadurch gekennzeichnet, dass**, um die Form eines von den Fixierelementen (15) fixierten Werkstücks (27) zu steuern, die Steuerungseinheit (43) dazu eingerichtet ist, die Anpassung des Abstands zwischen dem ersten und zweiten Ende (29, 31) der Linearaktoren (17) durch Steuerung eines Antriebs (35) der Linearaktoren (17) in Abhängigkeit von der von der Erfassungseinrichtung (45) erfassten tatsächlichen Form des Werkstücks (27) zu steuern.

2. System nach Anspruch 1, wobei die Trägerstrukturanordnung (13) eine Montageebene (21) definiert und wobei die Richtung (36) der linearen Bewegung senkrecht zur Montageebene (21) verläuft.

3. System nach Anspruch 1 oder 2, wobei eine Kraftsensoreinrichtung (39) bereitgestellt ist, um eine während der linearen Bewegung auf den Linearaktor (17) ausgeübte Kraft zu erfassen.

4. System nach Anspruch 3, wobei eine Speichereinrichtung (41) zum Speichern der von der Kraftsensoreinrichtung (39) erfassten Daten bereitgestellt ist.

5. System nach einem der Ansprüche 1 bis 4, wobei die Fixierungselemente (15) als Saugnapfelemente (25) ausgebildet sind.

6. System nach Anspruch 1, wobei die Erfassungseinrichtung (45) mehrere Reflektorelemente, die dazu eingerichtet sind, an beabstandeten Stellen auf dem Werkstück (27) befestigt zu werden, und eine optische Scanvorrichtung umfasst, die dazu eingerichtet ist, Licht in mehrere Richtungen auszustrahlen und durch das Erfassen der von dem ausgestrahlten Licht erzeugten Reflexionen der Reflektorelemente die räumliche Position der Reflektorelemente zu bestimmen, wenn diese an den Fixierungselementen fixiert sind.

7. System nach Anspruch 1, wobei die Erfassungseinrichtung (45) eine Projektionsvorrichtung zum Projizieren eines Rasters auf das Werkstück (27), wenn dieses von den Fixierungselementen (15) fixiert wird, und ein Kamerasystem zum Aufzeichnen der Form des Rasters auf dem Werkstück (27) umfasst.

8. Verfahren zur Montage von Werkstücken, das ein Montagesystem (1) nach einem der Ansprüche 1 bis 7 einsetzt, wobei das Verfahren die folgenden Schritte umfasst:
a. Bereitstellen eines ersten Werkstücks (27) und eines zweiten Werkstücks,
b. Fixieren des ersten Werkstücks (27) auf den Fixierungselementen (15),
c. Anpassen der Form des ersten Werkstücks (27) durch das Anpassen des Abstands zwischen dem ersten und zweiten Ende (29, 31) der Linearaktoren (17) und
d. Positionieren des geformten ersten Werkstücks (27) in Bezug zum zweiten Werkstück mittels der Positionierungsvorrichtung (5), um ein Gesamtwerkstück zu bilden,
**dadurch gekennzeichnet, dass**
das Anpassen des Abstands zwischen dem ersten und zweiten Ende (29, 31) der Linearaktoren (17) in Abhängigkeit von der Form des auf den Fixierungselementen (15) fixierten ersten Werkstücks (27) gesteuert wird, und die Form des ersten Werkstücks (27) von der Erfassungseinrichtung (45) erfasst wird.

9. Verfahren nach Anspruch 8, wobei die Kraftsensoreinrichtung (39) bereitgestellt ist, um eine während der linearen Bewegung durch den Linearaktor (17) aufgebrachte Kraft zu erfassen, und wobei das Anpassen des Abstands zwischen dem ersten und zweiten Ende (29, 31) der Linearaktoren (17) in Abhängigkeit von der während der linearen Bewegung von den Linearaktoren (17) aufgebrachten und von der Kraftsensoreinrichtung (39) erfassten Kraft gesteuert wird.

10. Verfahren nach Anspruch 8 oder 9, wobei das erste Werkstück (27) und das zweite Werkstück als Flugzeugstrukturkomponenten ausgebildet sind, insbesondere Rumpfabschnitte, Tragwerkabschnitte oder Leitwerkabschnitte.

## Revendications

1. Système d'assemblage (1) comprenant un appareil d'assemblage (3) et un dispositif de positionnement (5) tel qu'un robot industriel ayant une partie d'extrémité (9) qui comprend un connecteur (11), l'appareil d'assemblage (3) comprenant :
un ensemble structure de support (13) tel qu'une structure de cadre qui est munie d'une partie d'accouplement (19) pour accoupler l'ensemble structure de support (13) au dispositif de positionnement (5) tel qu'un robot industriel, et
une pluralité d'éléments de fixation (15) pouvant fixer une pièce de travail (27),
chaque élément de fixation (15) étant relié à l'ensemble structure de support (13) par l'intermédiaire d'un actionneur linéaire (17) dont une première extrémité (29) est montée sur l'ensemble structure de support (13) et dont une seconde extrémité (31) porte l'élément de fixation (15),
l'actionneur linéaire (17) étant conçu pour être commandé de sorte que la distance entre la première et la seconde extrémité (29, 31) puisse être ajustée par un mouvement linéaire,
le dispositif de positionnement (5) étant conçu pour déplacer la partie d'extrémité (9) par rapport à la position d'une base (7) du dispositif de positionnement (5) et pour positionner une pièce de travail (27) par rapport à une autre pièce de travail, de sorte à former une pièce de travail globale,
la partie d'accouplement (19) de l'appareil d'assemblage (3) étant accouplée au connecteur (11),
le système d'assemblage (1) comprenant en outre un moyen de détection (45) qui est conçu pour déterminer les positions dans l'espace d'une pluralité de points sur une pièce de travail (27), et
une unité de commande (43) étant fournie conçue pour commander l'ajustement de la distance entre la première et la seconde extrémité (29, 31) d'au moins un desdits actionneurs linéaires (17) en fonction des positions comme déterminé par le moyen de détection (45),
**caractérisé en ce que**
pour commander la forme d'une pièce de travail (27) fixée par les éléments de fixation (15), l'unité de commande (43) est conçue pour commander l'ajustement de la distance entre la première et la seconde extrémité (29, 31) des actionneurs linéaires (17) en commandant un entraînement (35) des actionneurs linéaires (17) en fonction de la forme réelle de la pièce de travail (27) détectée par le moyen de détection (45).

2. Système selon la revendication 1, ledit ensemble structure de support (13) définissant un plan de montage (21), et la direction (36) dudit mouvement linéaire étant perpendiculaire audit plan de montage (21) .

3. Système selon la revendication 1 ou 2, un moyen de capteur de force (39) étant fourni pour détecter une force appliquée par ledit actionneur linéaire (17) pendant ledit mouvement linéaire.

4. Système selon la revendication 3, le moyen de mémoire (41) étant fourni pour stocker des données détectées par ledit moyen de capteur de force (39).

5. Système selon l'une quelconque des revendications 1 à 4, lesdits éléments de fixation (15) étant formés comme éléments à ventouse (25).

6. Système selon la revendication 1, le moyen de détection (45) comprenant une pluralité d'éléments réflecteurs conçus pour être fixés à des emplacements espacés sur la pièce de travail (27) et un dispositif de balayage optique conçu pour émettre de la lumière dans une pluralité de directions et déterminer la position dans l'espace des éléments réflecteurs quand ils sont fixés aux éléments de fixation par détection des réflexions provenant des éléments réflecteurs générées par la lumière émise.

7. Système selon la revendication 1, le moyen de détection (45) comprenant un dispositif de projection pour projeter une grille sur la pièce de travail (27) lorsqu'elle est fixée par lesdits éléments de fixation (15), et
un système de caméra pour enregistrer la forme de la grille sur la pièce de travail (27).

8. Procédé d'assemblage de pièces de travail utilisant un système d'assemblage (1) selon l'une quelconque des revendications 1 à 7, comprenant les étapes consistant à :
a. fournir une première pièce de travail (27) et une seconde pièce de travail,
b. fixer ladite première pièce de travail (27) sur les éléments de fixation (15),
c. ajuster la forme de ladite première pièce de travail (27) en ajustant la distance entre la première et la seconde extrémité (29, 31) des actionneurs linéaires (17), et
d. positionner la première pièce de travail (27) façonnée par rapport à la seconde pièce de travail au moyen du dispositif de positionnement (5), de sorte à former une pièce de travail globale,
**caractérisé en ce que**
l'ajustement de la distance entre la première et la seconde extrémité (29, 31) des actionneurs linéaires (17) est commandé en fonction de la forme de la première pièce de travail (27) fixée sur les éléments de fixation (15), et
la forme de la première pièce de travail (27) est détectée par le moyen de détection (45).

9. Procédé selon la revendication 8, le moyen de capteur de force (39) étant fourni pour détecter une force appliquée par ledit actionneur linéaire (17) pendant ledit mouvement linéaire, et l'ajustement de la distance entre la première et la seconde extrémité (29, 31) des actionneurs linéaires (17) étant commandé en fonction de la force appliquée par lesdits actionneurs linéaires (17) pendant ledit mouvement linéaire et détecté par ledit moyen de capteur de force (39).

10. Procédé selon la revendication 8 ou 9, la première pièce à usiner (27) et la seconde pièce à usiner étant formées en tant que composants de structure d'aéronef, en particulier des sections de fuselage, des sections d'aile ou des sections d'unité de queue.
